Europäisches Patentamt

European Patent Office

Office européen des brevets

(19)

(11) Veröffentlichungsnummer : **0 027 867**
**B2**

(12) **NEUE EUROPÄISCHE PATENTSCHRIFT**

(45) Veröffentlichungstag der neuen Patentschrift :
29.07.87

(21) Anmeldenummer : 80104862.0

(22) Anmeldetag : 16.08.80

(51) Int. Cl.⁴ : **D 05 B 19/00**, G 05 D 13/62,
H 02 P 8/00

(54) Steuereinrichtung für den Antrieb eines Schrittmotors zur Verstellung der Überstichbreite und/oder Vorschublänge einer Nähmaschine.

(30) Priorität : 24.10.79 DE 2942844

(43) Veröffentlichungstag der Anmeldung :
06.05.81 Patentblatt 81/18

(45) Bekanntmachung des Hinweises auf die Patenterteilung : 21.12.83 Patentblatt 83/51

(45) Bekanntmachung des Hinweises auf die Entscheidung
über den Einspruch : 29.07.87 Patentblatt 87/31

(84) Benannte Vertragsstaaten :
CH FR IT LI SE

(56) Entgegenhaltungen :
DE-A- 2 143 680
DE-A- 2 160 093
DE-A- 2 702 488
DE-A- 2 706 763
DE-A- 2 734 404
DE-A- 2 843 105
DE-A- 2 909 664
DE-B- 2 420 157
DE-B- 2 436 201
GB-A- 2 014 200
US-A- 4 142 473
"Das Schrittmotoren-Handbuch" herausgegeben
von Eduard Bautz GmbH 1977, Seiten 50-54

(73) Patentinhaber : Pfaff Haushaltmaschinen GmbH
Gritznerstrasse 11
D-7500 Karlsruhe-Durlach (DE)

(72) Erfinder : Hartwig, Jürgen
Merkurweg 4
D-7505 Ettlingen 5 (DE)

(74) Vertreter : Klein, Friedrich
Königstrasse 154
D-6750 Kaiserslautern (DE)

EP 0 027 867 B2

**Beschreibung**

Die im Oberbegriff des Anspruchs 1 als bekannt angegebene Steuereinrichtung für einen Schrittmotor in einer Nähmaschine (DE-PS 2 734 404) weist den Nachteil auf, daß durch den starken Stromanstieg in den Wicklungen des Motors und die daraus resultierende sehr schnelle Beschleunigung und Verzögerung des Rotors sowie der angetriebenen externen Massen bei der ruckweisen Ausführung der Drehschritte ein sehr großes Geräusch erzeugt wird. Außerdem treten Resonanzerscheinungen bei bestimmten Frequenzschritten des Schrittmotors und Pendelerscheinungen um die jeweilige Raststellung auf, wodurch sich noch zusätzlich ein Anstieg des Geräuschpegels ergibt.

Durch die DE-OS 2 160 093 ist eine Nähmaschine bekanntgeworden, bei der ein mit der Hauptwelle gekoppelter Synchronisator eine Vielzahl von Taktimpulsen liefert. Bei der Nähmaschine handelt es sich um eine mit konstanter Geschwindigkeit arbeitende Gruppenstich-Nähmaschine, so daß die Taktimpulse beim Betrieb der Nähmaschine mit konstanter Frequenz erzeugt werden. Die vom Syndronisator abgegebenen Taktimpulse werden entsprechend einer vorgegebenen Tabelle in unterschiedlich lange Impulsgruppen für die Beschleunigung, den Betrieb und die Abbremsung des jeweiligen Schrittmotors unterteilt. Mit dieser Maßnahme soll ein genau definierter, an die Steuerung eines trägheitsbehafteten Werkstückrahmens angepaßter Bewegungsablauf der auszuführenden Schrittfolgen der Schrittmotore erzielt werden. Am Ende jeder Taktimpulsgruppe wird ein Schrittimpuls an den jeweiligen Schrittmotor gegeben. Für jede vorbestimmte Schrittzahl des Schrittmotors muß dabei eine eigene Tabelle vorhanden sein, so daß die Anordnung einen erheblichen Steuerungsaufwand erfordert. Eine Anpassung der Schrittfrequenz an verschiedene Nähgeschwindigkeiten ist nicht vorgesehen.

Durch die DE-OS 2 706 763 ist eine Nähmaschine bekannt, die für den Transport des Nähgates neben dem normalen Stoffschieber zusätzlich eine zwangsläufig angetriebene Walze aufweist, welche von einem Schrittmotor angetrieben wird. Dieser Schrittmotor erhält seine Impulse von einem Impulsgeber, der am Hauptantriebsmotor der Nähmaschine angeordnet ist. Hierdurch erfolgt der Antrieb des Schrittmotors in Abhängigkeit von der Drehzahl des Hauptantriebsmotors. Der Schrittwirkel des Schrittmotors soll zur Veränderung der Transportlänge der Walze zwar veränderbar sein, jedoch enthält diese Veröffentlichung weder einen Hinweis über die Ausbildung der die Schrittwinkelveränderungen bewirkenden Steuermittel noch ist eine Aussage über die Art und Weise der Ansteuerung oder über das Bewegungsverhalten des Schrittmotors gemacht.

Der im Anspruch 1 angegebenen Erfindung liegt die Aufgabe zugrunde, eine Steuereinrichtung für einen Schrittmotor zu schaffen, mit der die Geräuschbildung des Schrittmotors wesentlich unter den Bereich des Geräuschpegels gebracht wird, der durch den Betrieb der Nähmaschine entsteht, ohne daß dabei die Antriebseigenschaften des Schrittmotors beeinträchtigt werden. Dadurch wird bei niedrigen Geschwindigkeiten der Nähmaschine, bei der diese nur einen geringen Geräuschpegel verursacht, durch die niedrige Schrittfrequenz auch eine geringe Geräuschentwicklung des Schrittmotors erhalten. Infolge der geringen Drehzahl der Nähmaschine steht dem Schrittmotor auch eine längere Zeit für die Ausführung seiner Tätigkeit zur Verfügung, so daß hier keine zusätzlichen Probleme auftreten. Bei höheren Drehzahlen der Nähmaschine kann auch der Schrittmotor eine höhere Geräuschbildung annehmen, da dann das von ihm verursachte Geräusch im allgemeinen Geräuschpegel der Nähmaschine untergeht.

Die Änderung der Schrittfrequenz des Schrittmotors kann dabei stetig oder stufenweise in Abhängigkeit von der Motordrehzahl erfolgen.

Eine vorteilhafte Möglichkeit der Anpassung der Frequenzänderung des Schrittmotors an die Nähgeschwindigkeit ergibt sich durch die Maßnahmen nach den Ansprüchen 4 und 5.

Eine weitere wesentliche Geräuschminderung des Schrittmotors ergibt sich durch die Steuerung des Schrittmotors nach den Ansprüchen 6 bis 8. Dadurch wird erreicht, daß die auszuführenden Einzelschritte des Motors nicht abrupt erfolgen, sondern in eine Mehrzahl von gleichförmig ausgebildeten Rampen- oder Treppenstufen unterteilt sind.

Durch die DE-OS 2 803 201 und die DE-PS 2 436 201 sind zwar vier- bzw. fünfpolige Schrittmotore mit komplizierten Steuerungsanordnungen bekanntgeworden, die einen stufenweisen Verlauf der normal sinusförmigen Antriebskurve des Schrittmotors erzeugen ; eine einfache Übertragung dieser bekannten Steuerungen zur Erzielung des Prinzips der stufenförmigen Abwandlung des sinusförmigen Schrittantriebes auf einen zwei Strangwicklungen aufweisenden Schrittmotor ist aber nicht gegeben.

Außerdem wird durch die erfindungsgemäße Ausbildung der Bauteileaufwand gegenüber den bekannten Lösungen wesentlich vermindert, so daß die Steuerung auch in den bei Nähmaschinen vorhandenen minimalen Raum unterbringbar ist. Die vorgeschlagene Lösung hat den weiteren Vorteil, daß sich ein langsamer An- und Auslauf des Schrittmotors ohne die sonst notwendigen Schaltmaßnahmen in das Steuerprogramm aufnehmen lassen.

Ein Ausführungsbeispiel der Erfindung ist in den Fig. 1 bis 9 dargestellt. Es zeigt

Figur 1 die Ansicht einer Nähmaschine mit dem Antrieb der Überstich- und der Stichlängenverstellung durch Schrittmotore,

Figur 2 ein Blockschaltbild, das die Steuerung eines der Schrittmotore zeigt,

Figur 3 einen vereinfachten Schaltplan von der Stromregelung und der Endstufe eines Stranges des Schrittmotors,

Figur 4 den Verlauf der Steuer- und der Pegelspannungen sowie der Strangströme der beiden Strangwicklungen des Schrittmotors und den Drehwinkel seines Rotors,

Figur 5 den Spannungsverlauf in der Stromregelschaltung,

Figuren 6 bis 9 je ein Flußdiagramm mit Einzelheiten der Verfahrensschritte der in den Programmspeichern der Mikrocomputer gespeicherten Programme.

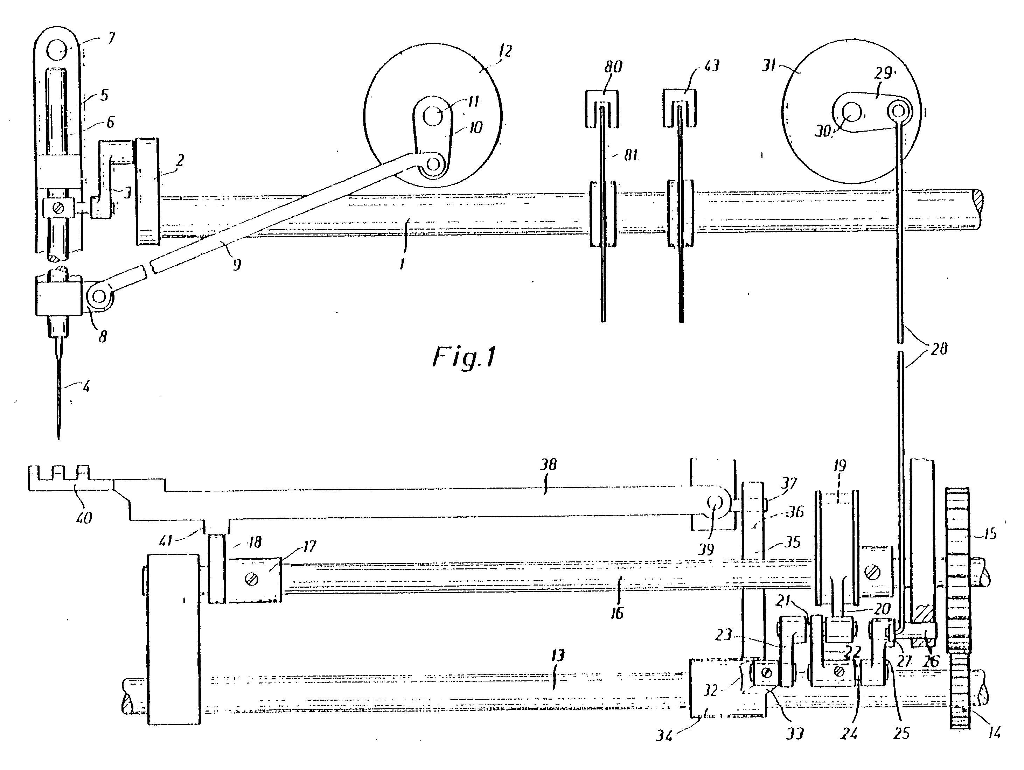

Wie die Fig. 1 zeigt, ist die Nähmaschine mit einer Hauptwelle 1 ausgestattet, welche über eine Kurbel 2 und einen Lenker 3 eine mit einer Nadel 4 versehene, in einer Führungsschwinge 5 gelagerte Nadelstange 6 in vertikale Hubbewegungen versetzt. Die Führungsschwinge 5 ist dabei in dem nicht dargestellten Gehäuse der Nähmaschine mittels eines Zapfens 7 gelagert.

Die Führungsschwinge 5 weist einen Ansatz 8 auf, der über einen Lenker 9 mit einer Kurbel 10 verbunden ist, die auf der Welle 11 eines im Gehäuse der Nähmaschine angeordneten Schrittmotors 12 zur Steuerung der Überstichbreite der Nadel 4 befestigt ist.

Die Hauptwelle 1 treibt über eine nicht dargestellte Kette eine untere Welle 13 an. Auf der Welle 13 ist ein Zahnrad 14 befestigt, welches mit einem Zahnrad 15 in Eingriff steht, das auf einer parallel zur Welle 13 gelagerten Welle 16 befestigt ist. Auf dieser ist ein Hebeexzenter 17 festgeschraubt, welcher einen Nocken 18 trägt. Auf der Welle 16 ist ferner ein Exzenter 19 befestigt, der von einer Exzenterstange 20 umgriffen wird, an der mittels eines Bolzens 21 zwei Lenker 22 und 23 angelenkt sind. Der Lenker 22 ist über einen Bolzen 24 mit einem Winkelhebel 25 drehbar verbunden, der auf einer im Gehäuse der Nähmaschine befestigten Achse 26 drehbar gelagert ist und über einen Arm 27 des Winkelhebels 25 und eine Stange 28 mit einer Kurbel 29 verbunden ist, die auf der Welle 30 eines zweiten in dem Gehäuse der Maschine angeordneten Schrittmotors 31 befestigt ist, der die Steuerung der Stichlänge der Nähmaschine bewirkt.

Durch einen Bolzen 32 ist der Lenker 23 mit einem Arm 33 eines auf der Welle 13 gelagerten Schwinghebels 34 gelenkig verbunden. Ein zweiter nach oben ragender Arm 35 des Schwinghebels 34 weist an seinem Ende einen Führungsschlitz 36 auf, in dem ein Zapfen 37 geführt ist. Dieser ist an einem Tragarm 38 befestigt, der auf einer horizontalen, im Gehäuse der Nähmaschine parallel zur Vorschubrichtung befestigten Achse 39 verschiebbar gelagert ist. An seinem freien Ende trägt der Tragarm 38 einen Stoffschieber 40, der zum Transport von Nähgut vorgesehen ist, welches von der Nadel 4 im Zusammenwirken mit einem nicht dargestellten Greifer vernäht wird. Der Tragarm 38 stützt sich über einen nach unten gerichteten Steg 41 auf den Nocken 18 des Hebeexzenters 17 ab.

Die beiden Schrittmotore 12 und 31 sind in ihrem Aufbau und in ihrer prinzipiellen Steuerung identisch ; es genügt daher für das Verständnis, die Beschreibung der Steuerung des Schrittmotors 12.

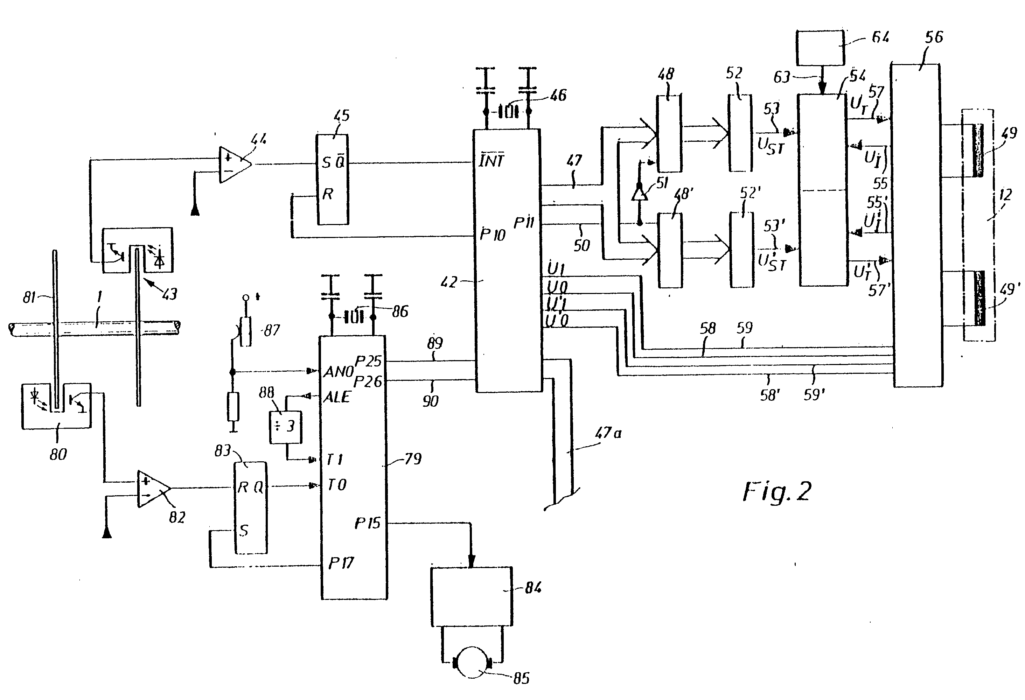

Der Schrittmotor 12, der zur Steuerung des seitlichen Ausschlages der Führungsschwinge 5 gegenüber eine Mittelstellung dient, ist als Zweistrang-Schrittmotor ausgebildet. Er wird von einem Mikrocomputer 42 (Fig. 2) gesteuert, in dessen Speicher in bekannter Weise eine Vielzahl von beliebigen Nähmustern gespeichert sind.

Am Mikrocomputer 42 ist ein von der Armwelle 1 der Nähmaschine gesteuerter Impulsgeber 43 angeschlossen, der bei jeder Maschinenumdrehung dann einen Impuls abgibt, wenn die Nadel 4 das Nähgut verlassen hat und der Schrittmotor 12 die Nadelstangenposition verstellen kann. Der Impuls wird zur Impulsformung einem Komparator 44 zugeführt, dessen Ausgang mit dem Setzeingang S eines Flipflop-Schalters 45 verbunden ist. Der Rücksetzeingang R des Flipflop-Schalters 45 ist an einen Ausgang P10 des Mikrocomputers 42 und der $\overline{Q}$-Ausgang des Flipflop-Schalters 45 an den $\overline{INT}$-Eingang des Mikrocomputers 42 angeschlossen.

Gleichfalls am Mikrocomputer 42 ist ein Schwingquarz 46 angeschlossen, der eine impulsförmige Ausgangsspannung liefert.

Der Mikrocomputer 42 ist über eine Gruppe von acht Datenleitungen 47 mit Zwischenspeichern 48 und 48' zur Übertragung der Steuerungsvorgänge für die in dem Schrittmotor 12 vorhandenen beiden Strangwicklungen 49 und 49' verbunden, die mit Konstantstrom-Chopperregelung betrieben werden. Außerdem ist der Ausgang P11 des Mikrocomputers 42 über eine Leitung 50 mit dem Zwischenspeicher 48' und über ein in der Leitung 50 liegendes Nicht-Glied 51 mit dem Zwischenspeicher 48 verbunden.

Da der Aufbau der Regelschaltung zwischen den Zwischenspeichern 48 bzw. 48' und den Strangwicklungen 49 bzw. 49' identisch ist, wird nur die Regelung für die Strangwicklung 49 beschrieben. Gleichartige Elemente in den beiden Regelkreisen sind dabei mit gleichen Bezugszeichen versehen.

Dem Zwischenspeicher 48 ist ein Digital-Analog-Wandler 52 nachgeschaltet, in dem eine Rampen- oder Steuerspannung $U_{ST}$ erzeugt wird. Diese wird über eine Leitung 53 einer Stromreglerstufe 54 zugeführt, in der sie mit einer Istspannung $U_I$ verglichen wird, die über eine Leitung 55 von einer Schrittmotor-Endstufe 56 geliefert wird. In der Stromreglerstufe 54 wird eine Taktspannung $U_T$ erzeugt und über eine Leitung 57 an die Endstufe 56 geleitet. An die Schrittmotor-Endstufe 56 sind die beiden Strangwicklungen 49, 49' des Schrittmotors 12 angeschlossen. Der Mikrocomputer 42 und die Endstufe 56 sind noch durch Leitungen 58 und 59 zur Übertragung von Schaltspannungen $U_0$ und $U_1$ verbunden. Außerdem ist die Stromreglerstufe 54 über eine Leitung 63 mit einem Zeitschaltkreis 64 verbunden.

Der Mikrocomputer 42 ist durch eine weitere Gruppe von Leitungen 47a mit einer Regelschaltung für den Schrittmotor 31' verbunden. Diese Regelschaltung stimmt mit der Regelschaltung für den Schrittmotor 12 überein und ist daher aus Gründen der Überschtlichkeit nicht dargestellt.

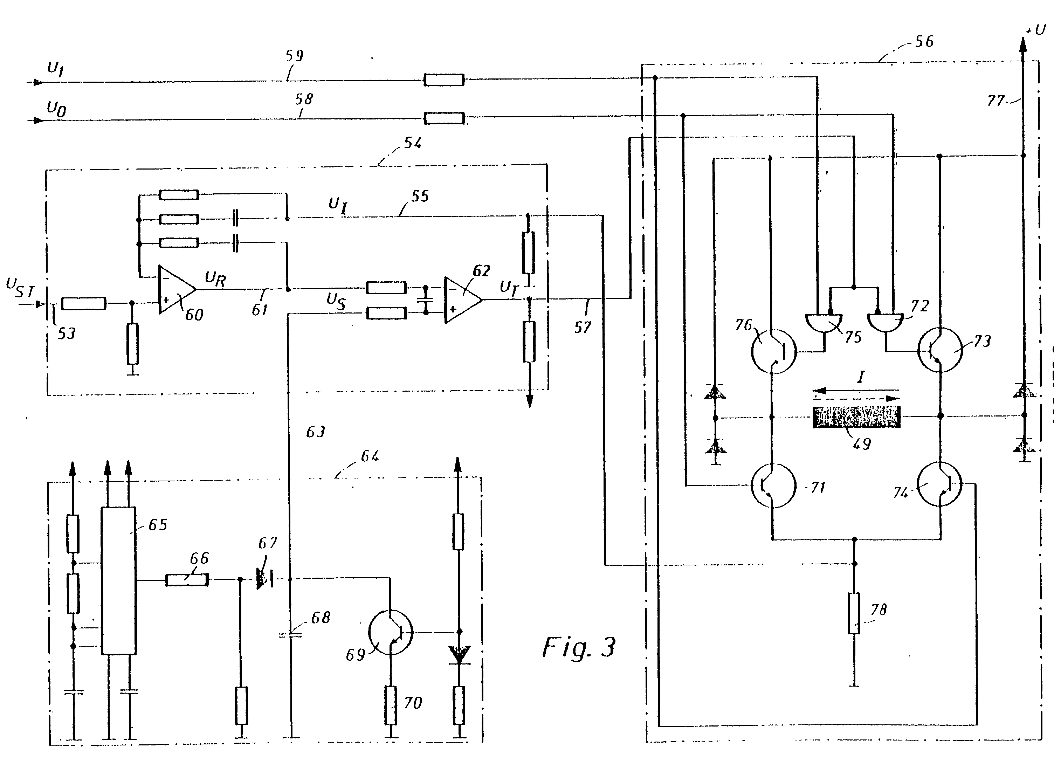

In der Stromreglerstufe 54 (Fig. 3) ist ein als PID-Regler geschalteter Operationsverstärker 60 vorgesehen, an dessen nicht invertierendem Eingang die Leitung 53 angeschlossen ist. An dem invertierenden Eingang des Operationsverstärkers 60 ist über eine RC-Kombination die Leitung 55 angeschlossen. Der Ausgang des Verstärkers 60 ist über eine Leitung 61 an den invertierenden Eingang eines Komparators 62 angeschlossen, an dessen nicht invertierendem Eingang die Leitung 63 liegt, die mit dem Zeitschaltkreis 64 verbunden ist, der eine Sägezahnspannung $U_S$ liefert. Der Ausgang des Komparators 62 ist über die Leitung 57 an die Schrittmotor-Endstufe 56 angeschlossen.

Der Zeitschaltkreis 64 weist einen Zeitgeber 65 auf, der über einen Widerstand 66 und eine Diode 67 mit einem Kondensator 68 verbunden ist, an den die Leitung 63 ebenfalls angeschlossen ist. Parallel zum Kondensator 68 liegt ein Entladeschaltkreis aus einem Transistor 69 und einem Widerstand 70.

Im Mikrocomputer 42 werden die Schaltspannungen $U_0$ und $U_1$ erzeugt, die über die Leitungen 58 und 59 der Schrittmotor-Endstufe 56 zugeführt werden. Die Schaltspannungen $U_0$ und $U_1$ können vom Mikrocomputer 42 gesteuert den Wert 0 oder 1 annehmen.

Die Leitung 58 ist an die Basis eines Schalttransistors 71 und über ein UND-Gatter 72 an die Basis eines Schalttransistors 73 geführt. An den invertierend ausgebildeten Eingang des UND-Gatters 72 ist außerdem die Leitung 57 angeschlossen. Die Leitung 59 ist an die Basis eines Schalttransistors 74 und über ein UND-Gatter 75 an die Basis eines Schalttransistors 76 geführt, wobei die Leitung 57 ebenfalls an den invertierend ausgebildeten Eingang des UND-Gatters 75 angeschlossen ist. Die Schalttransistoren 71, 73, 74 und 76 arbeiten als Schalter zur Zu- und Abschaltung bzw. Umschaltung des Betriebsstroms für die Strangwicklung 49 und bilden eine Brückenschaltung, in deren Brückendiagonale die Strangwicklung 49 liegt.

Die Kollektoren der Schalttransistoren 73 und 76 sind an einer Anschlußleitung 77 für den Betriebsstrom angeschlossen. Die Emitter der beiden Schalttransistoren 71 und 74 sind an einem Meßwiderstand 78 angeschlossen, der mit Masse in Verbindung steht und an dem die Leitung 55 zum Abgriff der Istspannung $U_1$ angeschlossen ist. Zur Anpassung der Schrittfrequenz der Schrittmotore 12 und 31 an die Maschinendrehzahl ist ein zweiter Mikrocomputer 79 (Fig. 2) vorgesehen, der auch zur Drehzahlregelung der Maschine dient. Am Mikrocomputer 79 ist ein Impulsgeber 80 angeschlossen, der Impulse von einer auf der Armwelle 1 der Maschine befestigten Schlitzscheibe 81 erhält, die 96 Schlitze aufweist. Die Impulse werden einem Komparator 82 zugeführt, dessen Ausgang an den Rücksetzeingang R eines Flipflop-Schalters 83 angeschlossen ist. Der Setzeingang S des Flipflop-Schalters 83 ist mit dem Ausgang P17 des Mikrocomputers 79 verbunden und der Q-Ausgang des Flipflop-Schalters 83 mit dem Eingang T0 des Mikrocomputers 79.

An dem Mikrocomputer 79 ist eine Steuerschaltung 84 für einen Antriebsmotor 85 angeschlossen, der über einen nicht dargestellten Antriebsriemen mit der Armwelle 1 der Nähmaschine verbunden ist. Außerdem ist ein Schwingquarz 86 sowie ein Fußanlasser 87 angeschlossen. Der Mikrocomputer 79 dient u. a. zur Steuerung und Stabilisierung der durch den Fußanlasser 87 jeweils vorgegebenen Drehzahl der Nähmaschine. Der ALE-Ausgang des Mikrocomputers 79 ist mit einem Frequenzteiler 88 verbunden, dessen Ausgang an dem Eingang T1 des Computers 79 liegt. Die Ausgänge P25 und P26 des Mikrocomputers 79 sind über zwei Leitungen 89 und 90 an den Mikrocomputer 42 angeschdlossen, um diesem Drehzahlinformationen zu übermitteln.

Die Anordnung arbeitet wie folgt :

Es sei angenommen, die Schaltspannung $U_0$ der Leitung 58 (Fig. 3) sei 1, die Schaltspannung $U_1$ der Leitung 59 sei 0 und die Taktspannung $U_T$ der Leitung 57 have ebenfalls den Pegel 0. Infolge des Pegels 0 der Leitung 59 sind die beiden Schalttransistoren 74 und 76 gesperrt. Der Pegel 1 der Leitung 58 bewirkt ein Durchschalten der Schalttransistoren 71 und 73, da am Ausgang des UND-Gatters 72 sowohl durch die Leitung 58 als auch durch die Leitung 57 infolge des invertierenden Eingangs das Signal 1 anliegt. Es fließt somit Betriebsstrom von der Leitung 77 über den Schalttransistor 73, die Strangwicklung 49, den Schalttransistor 71 und den Meßwiderstand 78 an Masse. Am Meßwiderstand 78 wird ein Spannungsabfall erzeugt, der als Istspannung $U_1$ über die Leitung 55 dem Operationsverstärker 60 zugeführt und hier mit der Steuerspannung $U_{ST}$ auf die Leitung 53 verglichen wird. Der als PID-Regler geschaltete Operationsverstärker 60 erzeugt daraus eine Regelspannung $U_R$, die über die Leitung 61 dem Komparator 62 zugeführt und dort mit der Sägezahnspannung $U_S$ verglichen wird, welche das Zeitschaltglied 64 liefert.

Der Zeitgeber 65 erzeugt Rechteckimpulse mit konstanter Frequenz, die über den Widerstand 66 und die Diode 67 den Kondensator 68 aufladen. In den Impulspausen wird den Kondensator 68 über den Transistor 69 und den Widerstand 70 entladen. Am Kondensator 68 entsteht damit die Sägezahnspannung $U_S$, welche über die Leitung 63 dem Komparator 62 zugeführt wird. Am Ausgang des Komparators 62 erscheint die Taktspannung $U_T$, welche den beiden UND-Gattern 72 und 75 zugeführt wird.

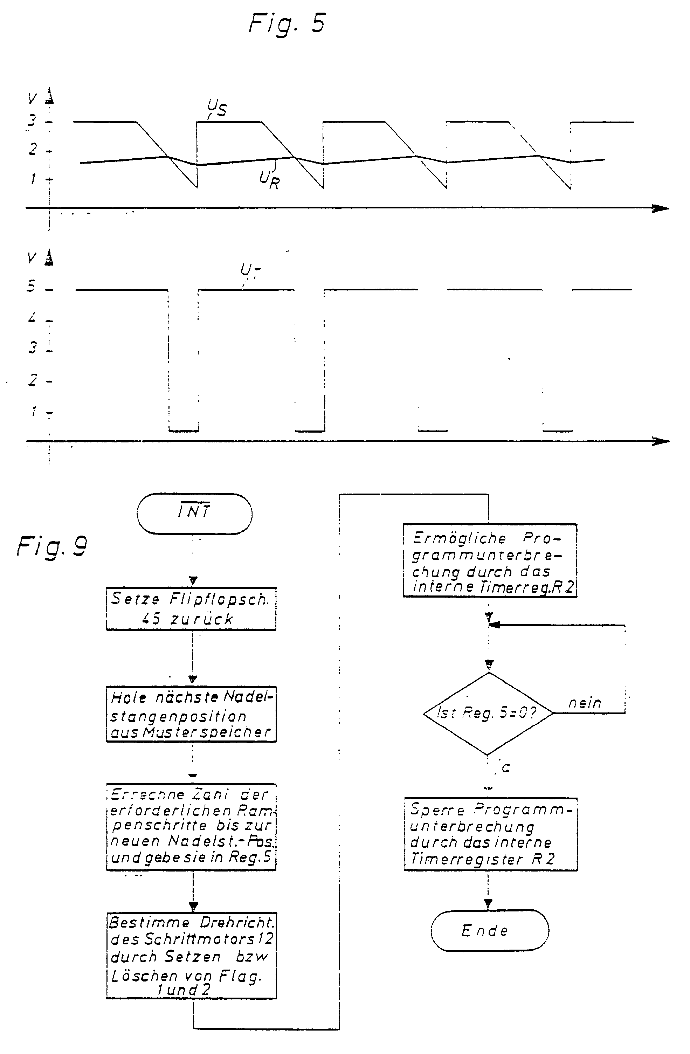

Fig. 5 zeigt den Verlauf der beiden Spannungen $U_R$ und $U_S$ am Komparator 62. Sobald der Spannungswert der Sägezahn-

spannung $U_S$ den Spannungswert der Regelspannung $U_R$ übersteigt, schaltet der Komparator 62 um, und die Taktspannung $U_T$ an seinem Ausgang nimmt den Pegel 1 an. Damit erscheint am Ausgang des UND-Gatters 72 »0« und der Schalttransistor 73 wird gesperrt. Der Stromfluß durch die Strangwicklung 49 wird damit unterbrochen, wodurch die Istspannung $U_I$ absinkt und die Regelspannung $U_R$ leicht ansteigt. Sobald die Sägezahnspannung $U_S$ kleiner als die Regelspannung $U_R$ wird, schaltet der Ausgang des Komparators 62 auf 0, der Ausgang des UND-Gatters 72 hat wieder Pegel 1 und schaltet den Schalttransistor 73 wieder ein. Entsprechend der Größe der Regelspannung $U_R$ verändert sich auch die Dauer der Impulspausen der Taktspannung $U_T$ und damit auch die Dauer der Durchschaltung des Schalttransistors 73, wodurch sich auch die Größe des Strangstroms I ändert. Das Tastverhältnis der Taktspannung $U_t$ stellt sich dabei so ein, daß der Strangstrom I einem Abbild der Steuerung $U_{ST}$ gleicht.

Um die Geräuschentwicklung des Schrittmotors 12 auf ein Mindestmaß herabzusetzen, ist eine fast kontinuierliche Bewegung des Rotors des Schrittmotors 12 anstelle einer Schrittbewegung vorgesehen. Dies wird durch einen zeitlich trapezförmigen Verlauf der normalerweise rechteckförmigen Form der Strangströme I und I' der beiden Strangwicklungen 49 und 49' erzielt. Dabei werden die vom Rotor auszuführenden Einzelschritte nicht abrupt ausgeführt, sondern der Übergang von einem Schritt zum anderen wird in eine Vielzahl von gleichförmigen Treppenstufen unterteilt, so daß praktisch eine fast gleichförmige Drehung des Rotors erreicht wird. Dies wird dadurch erreicht, daß die Strangströme I und I' der Strangwicklungen 49 und 49' des Schrittmotors 12 so gesteuert werden, daß ihre Form nicht mehr rechteckförmig, sondern trapez- oder treppenstufenförmig ausgebildet ist.

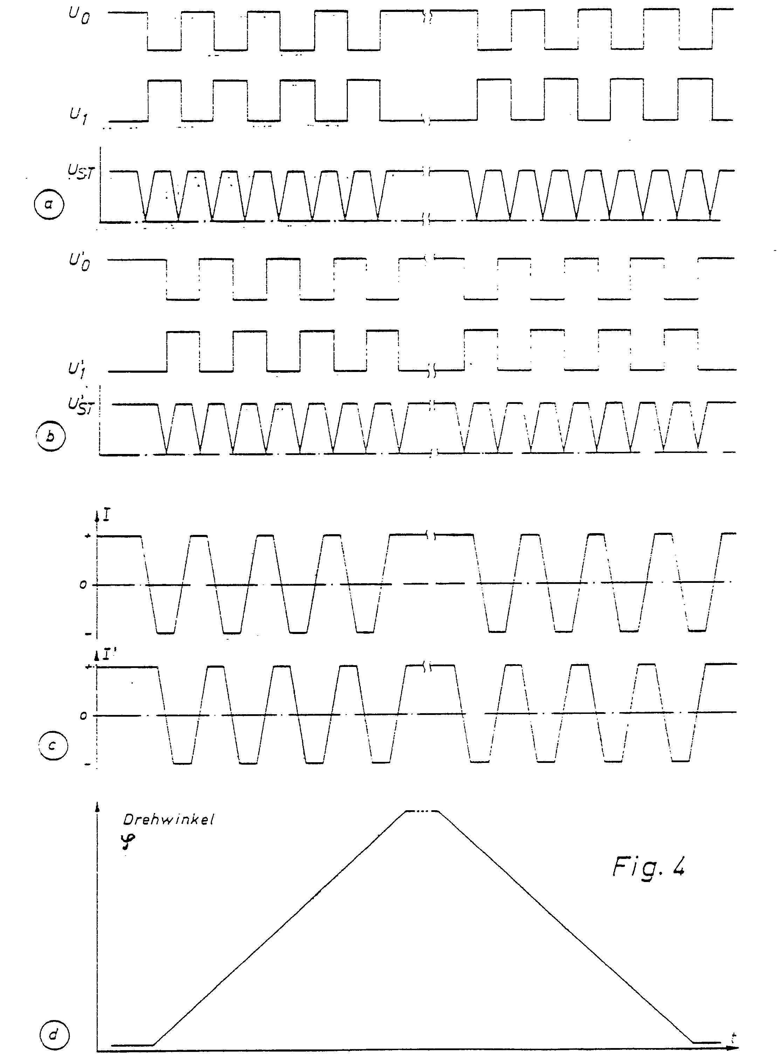

Fig. 4 dient zur Erläuterung der Vorgänge. Es soll angenommen werden, der Rotor steht und beide Strangströme I, I' haben ihren positiven Sollwert (Diagramme c und d). Nun wird der Strangstrom I der Strangwicklung 49 linear auf 0 verkleinert. Dabei dreht sich der Rotor proportional mit. Ist der Strangstrom I der Strangwicklung 49 »0«, wird die Stromrichtung durch Änderung der Schaltspannungen $U_0$ und $U_1$ umgeschaltet. Daraufhin wird der Strangstrom I linear bis zu seinem negativen Sollwert erhöht, wobei sich der Rotor ebenfalls kontinuierlich mitdreht. Jetzt wird der Strangstrom I der Strangwicklung 49 auf seinem negativen Sollwert gehalten und der Strangstrom I' der Strangwicklung 49' linear auf 0 verkleinert, dann die Stromrichtung durch Umschalten der Schaltspannungen $U'_0$ und $U'_1$ geändert und der Strangstrom I' anschließend wieder linear bis zu seinem negativen Sollwert erhöht, wonach sich der vorgeschriebene Vorgang wiederholt. Dabei dreht sich der Rotor immer linear mit; er macht also nicht mehr seine Normalschritte, sondern diese Normalschritte sind in kleinste Rampenschritte unterteilt. Die Geräuschentwicklung ist minimal und Resonanzeffekte treten praktisch nicht mehr in Erscheinung.

Die lineare Verminderung und Vergrößerung der Amplituden der Strangströme I und I' wird durch die beiden Steuerspannungen $U_{ST}$ und $U'_{ST}$ (Diagramme a und b) für die Strangwicklungen 49 und 49' erreicht. Sie müssen dazu den in Fig. 4 gezeigten sägezahnförmigen Verlauf haben und natürlich gegenseitig phasenverschoben sein. Fig. 4 zeigt gleichzeitig, wie die gegenseitige Phasenlage der Schaltspannungen $U_0$ und $U_1$ auf den Leitungen 58 und 59 und der im Digital-Analog-Wandler 52 erzeugten Steuerspannung $U_{ST}$ für die Strangwicklung 49 einerseits sowie der Schaltspannung $U'_0$ und $U'_1$ und der Steuerspannung $U'_{ST}$ für die Strangwicklung 49' andererseits die Drehrichtung des Schrittmotors 12 bestimmt, dessen jeweiliger Drehwinkel $\varphi$ im Diagramm d der Fig. 4 dargestellt ist.

Die Erzeugung der Steuerspannung $U_{ST}$ für die Strangwicklung 49 (Fig. 2) erfolgt durch den Mikrocomputer 42. Der Impulsgeber 43 gibt bei jeder Umdrehung der Armwelle 1 einen Impuls über den Komparator 44 an den Flipflop-Schalter 45, worauf dessen $\overline{Q}$-Ausgang den Zustand 0 annimmt und dadurch über den $\overline{INT}$-Eingang des Mikrocomputers 42 eine Programmunterbrechung auslöst. Es läuft ein Unterprogramm $\overline{INT}$ an. In diesem Unterprogramm (Fig. 9) wird zuerst der Flipflop-Schalter 45 durch einen kurzen Impuls vom Ausgang P10 des Mikrocomputers 42 an den Eingang R des Flipflop-Schalters 45 zurückgesetzt. Dann wird der Wert der nächsten Nadelstangenposition aus dem Musterspeicher geholt und daraus die Anzahl der zurückzulegenden Rampenschritte des Schrittmotors 12 gerechnet und in ein als Zahlregister dienendes Register, z. B. R5, gegeben sowie die auszuführende Drehrichtung des Schrittmotors 12 bestimmt, indem Flag 1 und/oder 2 entsprechend abgeändert werden. Dann wird eine Programm-unterbrechung durch ein internes Timerregister $R_2$ des Mikrocomputers 42 freigegeben und so lange erlaubt, bis die Anzahl der zurückzulegenden Rampenschritte ausgeführt ist, d. h., bis das Register R5 den Inhalt 0 hat. Anschließend wird die Programmunterbrechung durch das Timerregister $R_2$ gesperrt.

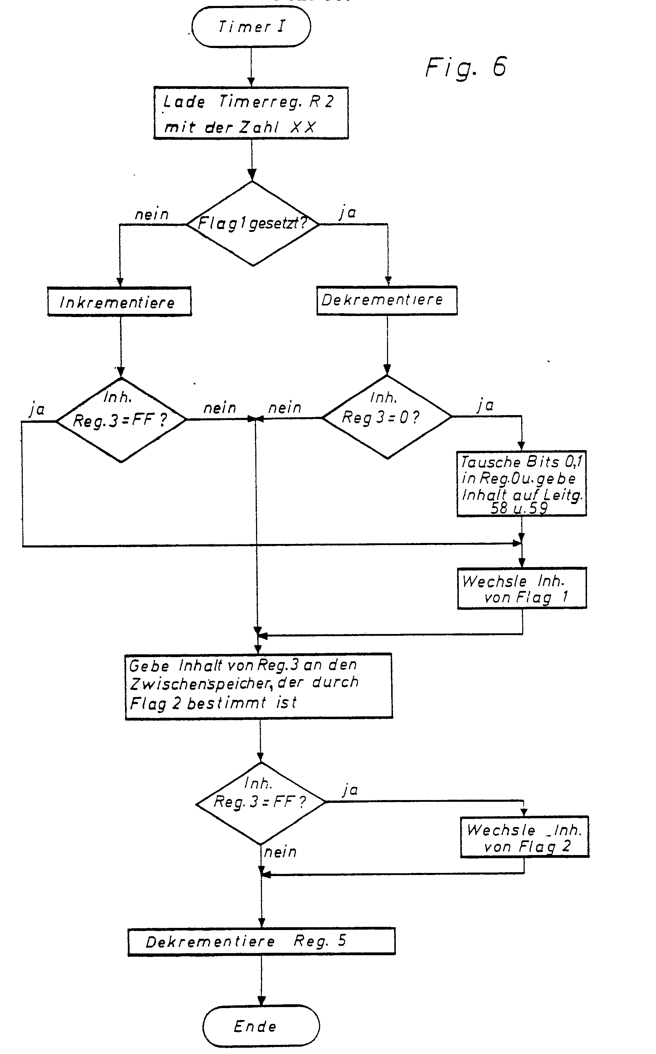

Das im Mikrocomputer 42 vorhandene Timerregister $R_2$, ein 8-bit-Zähler, erhält Impulse von dem Schwingquarz 46 über zwei interne Impulsteiler im Verhältnis von 1 : 480. Durch die Impulsteiler wird die Frequenz des Schwingquarzes 46 von 6 MHz auf 12,5 kHz verringert. Jeder Zählimpuls der Festfrequenz von 12,5 kHz erhöht den Inhalt des Timerregisters $R_2$ um den Betrag 1. Beim Überlauf von FF auf 00 erzeugt das Timerregister $R_2$ eine Programmunterbrechung, und das Unterprogramm « Timer I » (Fig. 6) wird abgearbeitet. Das Timerregister $R_2$ kann mit einer Zahl (00 ... FF) vorgeladen werden, um den Zeitabstand zu bestimmen, in welchem die Timerunterbrechung auftritt. Im Unterprogramm « Timer I » wird dazu das Timerregister $R_2$ jedes Mal wieder auf den gewünschten Wert vorgeladen, damit die nächste Unterbrechung im gleichen Zeitabstand auftritt. Es sei angenommen, daß das interne Register R0 zur Bestimmung der Schaltspannung $U_0$, $U_1$ auf den Leitungen 58 und 59, das Register R3 als Zählregister zur Erzeugung der Steuerspannung $U_{ST}$ und das Register R5 als Zählregister für die Rampenschritte dient. Es sei weiterhin angenommen, daß beide Zwischenspeicher 48, 48' hexadezimal FF gespeichert haben. Dementsprechend hat auch das Register R3 die Zahl FF gespeichert. Der Schrittmotor 12 soll stehen.

Um nun den Anker des Schrittmotors 12 zu drehen, wird beispielsweise zuerst die Steuerspannung $U_{ST}$ für die Strangwicklung 49 zeitlinear auf 0 verkleinert. Dazu wird das Unterprogramm « Timer I » herangezogen, das bei jedem Durchlauf eine Weiterdrehung des Rotors des Schrittmotors 12 um einen Rampenschritt bewirkt und das so lange wiederholt wird, bis die Anzahl der erforderlichen Rampenschritte zur Erreichung der neuen Position der Nadelstange 5 durch den Schrittmotor 12 ausgeführt ist.

In dem Unterprogramm » Timer I « wird zuerst das Timerregister $R_2$ auf eine durch den Mikrocomputer 79 vorbestimmte Zahl geladen, dann erfolgt ein erster Test, ob Flag 1 gesetzt ist, wobei Flag 1 gleich 1 bedeutet, daß der Inhalt des Registers R3 abwärts gezählt werden soll. Ist Flag 1 gleich 0, d. h. nicht gesetzt, wird der Inhalt des Registers R3 aufwärts gezählt. Ist der Test positiv, ist also Flag 1 gesetzt, wird das Register R3 um 1 dekrementiert.

Es folgt ein zweiter Test, bei dem geprüft wird, ob der Inhalt des Registers R3 gleich 0 ist. Verläuft der Test positiv, werden die Bits 0 und 1 in Register R0 vertauscht und auf die Leitungen 58 und 59 (siehe auch Fig. 2) gegeben. Anschließend wird der Inhalt von Flag 1 gewechselt.

Danach wird der Inhalt von Register, R3 an denjenigen Zwischenspeicher 48 oder 48' gegeben, der durch Flag 2 bestimmt ist. Dazu wird der Inhalt von Flag 2 auf die Leitung 50 gegeben. Ist Flag 2 gesetzt, geht der Inhalt des Registers R3 infolge des Nicht-Gliedes 51 an den Zwischenspeicher 48, ist Flag 2 nicht gesetzt, an den Zwischenspeicher 48'. Anschließend erfolgt ein dritter Test. Wenn der Inhalt des Registers R3 FF ist, wird der Inhalt von Flag 2 gewechselt, im anderen Fall wird der Inhalt von Flag 2 beibehalten. Schließlich wird das Register R5, welches die Rampenschritte zählt, dekrementiert. Nun ist das Unterprogramm beendet, und sein nächster Durchlauf kann beginnen, sobald das interne Timerregister $R_2$ dies veranlaßt.

Ist bei dem ersten obengenannten Test Flag 1 nicht gesetzt, wird das Register R3 um 1 inkrementiert. Es folgt hier ebenfalls ein zweiter Test, in dem geprüft wird, ob der Inhalt des Registers R3 gleich FF ist. Bei positiver Prüfung wird der Inhalt von Flag 1 gewechselt, dann fährt das Programm, wie auch bei negativem Test, durch Übergabe des Inhaltes von Register R3 an einen der Zwischenspeicher 48 oder 48' weiter, wie es oben beschrieben ist.

Es sei angenommen, daß bei der Übertragung des Inhaltes von Register R3 an den Zwischenspeicher 48 (Fig. 2 und 3) dessen Inhalt um 1 erniedrigt wurde. Dieser neue Inhalt wird in dem nachgeschalteten Digital-Analog-Wandler 52 in einen neuen Wert der Steuerspannung $U_{ST}$ umgewandelt, dann im Operationsverstärker 60 mit der Istspannung $U_1$ von der Schrittmotor-Endstufe 56 verglichen und daraus die Regelspannung UR erzeugt. Durch Änderung der Regelspannung $U_R$ vermindert sich auch entsprechend den oben beschriebenen Schaltmaßnahmen der Strangstrom I der Strangwicklung 49 um eine Rampenstufe, wobei sich der Rotor ebenfalls um das Maß einer Rampenstufe weiterdreht.

Sobald der Inhalt des Registers R3 den Wert 0 bei gesetztem Flag 1 annimmt, ist das Ergebnis beim zweiten Test des « Timer »-Programms positiv, und die Bits 0 und 1 in Register R0 werden vertauscht und auf die beiden Leitungen 58 und 59 ausgegeben. Anschließend wird der Inhalt von Flag 1 gelöscht.

Durch das Vertauschen der Bits 0 und 1 im Register R0 verändert der Mikrocomputer 42 die auf den Leitungen 58 und 59 anstehenden Schaltspannungen $U_0$ und $U_1$, wodurch auf der Leitung 58 die Schaltspannung den Wert 0 und auf der Leitung 59 die Schaltspannung den Wert 1 annimmt. Infolge des Pegels 0 der Leitung 58 sperren die beiden Schalttransistoren 71 und 73. Der Pegel 1 der Leitung 59 bewirkt dagegen ein Durchschalten der Schalttransistoren 74 und 76, solange die am invertierenden Eingang des an UND-Gatter 72 durch die Leitung 57 anliegende Taktspannung $U_T$ gleich 0 ist. Die Richtung des Strangstroms I in der Strangwicklung 49 wird damit umgeschaltet und die Stromstärke durch die Strangwicklung 49 durch das « Timer »-Programm stufenweise bis auf ihren maximalen Sollwert erhöht.

Sobald der zweite Test positiv ist, d. h., sobald der Inhalt des Registers R3 FF entspricht, wird der Inhalt von Flag 1 wieder gewechselt, so daß beim nächsten « Timer »-Programm abwärts gezählt wird.

Beim nächsten Schritt wird der Inhalt des Registers R3 an das Zwischenregister 48 ausgegeben, und dann wird das Register R3 noch einmal getestet, ob sein Inhalt FF ist.

Da dieser Test im vorliegenden Fall positiv verläuft, erfolgt eine Änderung des Inhaltes von Flag 2, so daß bei den folgenden « Timer »-Programmdurchläufen der Inhalt von Register R3 nunmehr in den Zwischenspeicher 48' eingelesen wird. Dies bedeutet, daß bei den folgenden Schritten die Steuerspannung $U_{ST}$ und damit der Strangstrom I für die Strangwicklung 49 auf ihrem maximalen Sollwert verharren, während nunmehr die Steuerspannung $U'_{ST}$ und damit auch der Strangstrom I' für die Strangwicklung 49' stufenweise verändert wird.

Durch das im festen Zeitraster aufgerufene Unterprogramm « Timer I » wird somit der Zwischenspeicher 48 mit einer Folge von Daten gelagen, die der nachgeschaltete Digital-Analog-Wandler 52 in die Spannungsform $U_{ST}$ zur Steuerung des Strangstroms I für die Strangwicklung 49 umsetzt. Anschließend geschieht das gleiche mit dem Zwischenspeicher 48' und dem Digital-Analog-Wandler 52' zur Erzeugung der Spannungsform $U'_{ST}$ zur Steuerung des Strangstroms I' für die Strangwicklung 49'. In dem Zeitpunkt, in dem die Steuerspannung $U_{ST}$ bzw. $U'_{ST}$ einer der beiden Strangwicklungen 49 oder 49' « 0 » werden, schaltet der Mikrocomputer 42 auch die entsprechenden Schaltspannungen $U_o$ und $U_1$ bzw. $U'_o$ und $U'_1$ um. Der Mikrocomputer 42 arbeitet dabei das Unterprogramm « Timer I » so oft ab, wie zum Weiterfahren des Schrittmotors 12 in die programmierte Stellung für die nächste Nadelstangenposition erforderlich ist.

Zur Anpassung der Schrittfrequenz des Schrittmotors 12 an die Drehzahl der Nähmaschine mißt der Mikrocomputer 79 (Fig. 2) die aktuelle Drehzahl der Nähmaschine und gibt über die Leitungen 89 und 90 eine 2-bit-Geschwindigkeitsinformation an den Mikrocomputer 42, wonach dieser den Schrittmotoren 12 und 31 eine der Drehzahl der Nähmaschine entsprechende Schrittfrequenz erteilt. Dabei gilt als Geschwindigkeitsinformation :

0 auf der Leitung 90 und 0 auf der Leitung 89 entspricht einer Maschinendrehzahl von weniger als 100 U/min.

0 auf der Leitung 90 und 1 auf der Leitung 89 entspricht einer Maschinendrehzahl zwischen 100 U/min und 200 U/min.

1 auf der Leitung 90 und 0 auf der Leitung 89 entspricht einer Maschinendrehzahl zwischen 200 U/min und 400 U/min.

1 auf der Leitung 90 und 1 auf der Leitung 89 entspricht einer schließlich einer Maschinendrehzahl von mehr als 400 U/min.

Ein internes Zählregister $R_1$ des Mikrocomputers 79 ist als Ereigniszähler programmiert, d. h., er zählt jede positive Flanke, die am Eingang T1 auftritt. Nun ist an den Eingang T1 eine Frequenz von 80 kHz gelegt, die über den externen Frequenzteiler 88 im Verhältnis 1 : 3 aus der computerinternen Frequenz ALE erzeugt wird. ALE ist eine aus der Frequenz des angeschlossenen Schwingquarzes 86 intern durch 15 geteilte Frequenz. Dies bedeutet, daß das Zählregister $R_1$ infolge der Eingangsfrequenz von 80 kHz alle 12,5 µsec um 1 inkrementiert wird.

Das Auslesen des Zählregister $R_1$ bzw. eines später zu erwähnenden Zählregister $R_4$, die Erzeugung der Drehzahlinformation sowie das anschließende Löschen geschieht durch eine Softwareunterbrechung. Per Programm wird ständig der Eingang T0 abgefragt und somit der Zeitpunkt festgestellt, in dem der vorgeschaltete Flipflop-Schalter 83 jeweils durch eine positive Taktflanke des Impulsgebers 80 gesetzt ist.

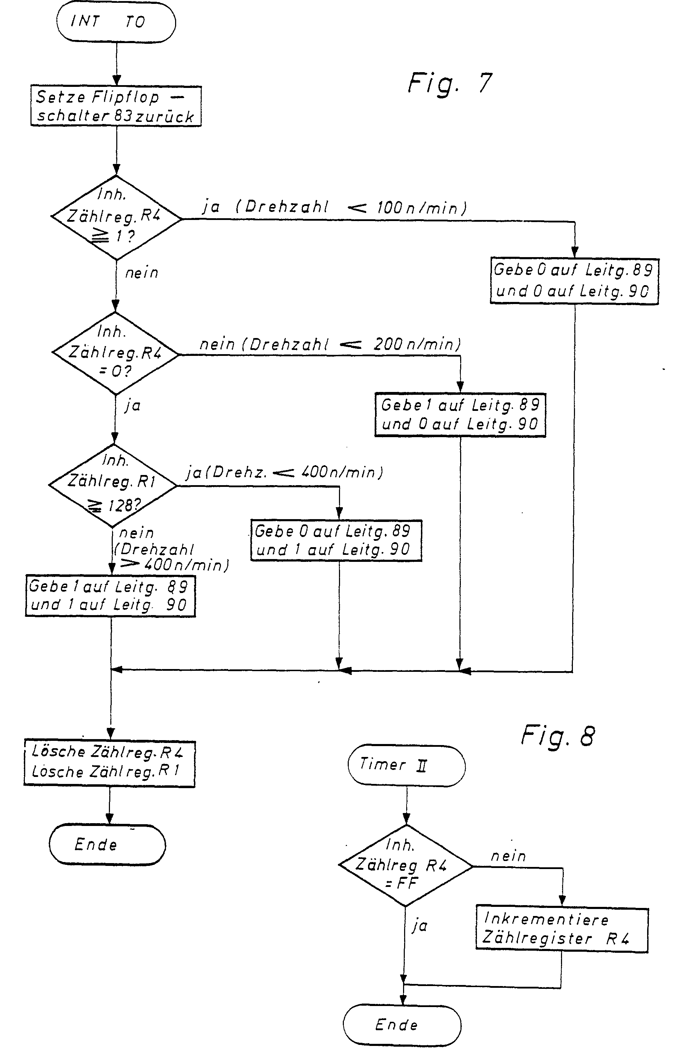

Der Inhalt des Zählregisters $R_1$ wird bei jeder positiven Taktflanke, welche die Schlitzscheibe 81 im Impulsgeber 80 erzeugt, ausgegeben, ausgewertet und dann gelöscht. Der Inhalt des Zählregisters $R_1$ ist somit vor dem Löschen ein Maß für die Zeit zwischen zwei Taktimpulsen durch die Schlitzscheibe 81 und damit auch ein Maß für die Drehzahl der Nähmaschine. Da die 8 Bit des Zählregisters $R_1$ dabei für Drehzahlen unter 200 U/min nicht ausreichen, um alle Takte zählen zu können, wird ein zusätzliches Zählregister R4 für diesen Zählvorgang mitverwendet. Je größer der Wert in den beiden Zählregistern $R_1$ und $R_4$ ist, um so kleiner ist die Drehzahl der Nähmaschine. Der Inhalt des Zählregisters R4 wird bei jedem Überlauf des Zählregisters $R_1$ von FF auf 00, wobei das Zählregister $R_1$ eine Unterbrechung erzeugt, um 1 inkrementiert. Dies geschieht im Unterprogramm « Timer II », das durch den Überlauf des Zählregisters $R_1$ aufgerufen wird (Fig. 8). Ein Überlauf des Zählregisters R4 von FF auf 0 bei nur geringer Drehzahl der Armwelle 1 wird durch Abfragen des Zählregisters $R_4$ im Unterprogramm « Timer II » auf Wert FF verhindert, da sonst bei einem Überlauf des Zählregisters R4 von FF auf 0 Fehlinterpretationen entstehen würden.

In Fig. 7 ist das Flußdiagramm für das Unterprogramm « INT T0 » zur Anpassung der Schrittfrequenz der Schrittmotore 12 und 31 an die Nähmaschinengeschwindigkeit dargestellt. Dieses Unterprogramm läuft nach dem Setzen des Flipflop-Schalters 83 durch einen Impuls der Schlitzscheibe 81 ab. In dem Programm werden die Zählerstände im Zählregister $R_1$ und im Zählregister R4 geprüft und ausgewertet. Zuerst setzt der Mikrocomputer 79 über seinen Ausgang P17 den Flipflop-Schalter 83 wieder zurück. Dann wird das Zählregister R4 daraufhin getestet, ob sein Inhalt $\geqslant 1$ ist. Wenn der Test positiv ausfällt, liegt die Maschinendrehzahl unter 100 U/min, und Mikrocomputer 79 gibt auf beide Leitungen 89 und 90 zum Mikrocomputer 42 das Potential 0. Der Mikrocomputer 42 begrenzt daraufhin die Schrittfrequenz der beiden Schrittmotore 12 und 31 auf 70 Hz.

Fällt der Test negativ aus, wird ein zweiter Test des Zählregisters R4 durchgeführt, ob sein Inhalt 0 ist. Wenn der Test negativ ist, liegt die Maschinendrehzahl zwischen 100 U/min und 200 U/min, und es wird auf der Leitung 89 das Potential 1 und auf der Leitung 90 das Potential 0 an den Mikrocomputer 42 gegeben, der dann die Schrittfrequenz der Schrittmotore 12 und 31 auf 140 Hz erhöht.

Fällt der Test positiv aus, wird ein Test des Zählregisters $R_1$ durchgeführt. Es wird geprüft, ob dessen Inhalt = 128 ist. Fällt der Test positiv aus, dann liegt die Drehzahl der Nähmaschine zwischen 200 U/min und 400 U/min, und der Mikrocomputer 79 gibt auf die Leitung 89 das Potential 0 und auf die Leitung 90 das Potential 1, wodurch der Mikrocomputer 42 die Schrittfrequenz der Schrittmotore 12 und 31 auf 270 Hz einreguliert. Beim negativen Test des Zählregisters $R_1$ liegt die Drehzahl des Maschinenantriebes über 400 U/min, und der Mikrocomputer 79 schaltet auf beide Leitungen 89 und 90 das Potential 1, um dem Mikrocomputer 42 eine entsprechende Information zuzuleiten, so daß dieser die Schrittfrequenz der Schrittmotore 12 und 31 auf 800 Hz einreguliert. Am Schluß werden beide Zählregister $R_1$ und R4 gelöscht und stehen zu einer neuen Drehzahlüberprüfung bereit.

Entsprechend der Verteilung der Potentiale auf den beiden Leitungen 89 und 90 wird das Timerregister $R_2$ des Mikrocomputers 42 mit einer anderen Zahl geladen, wodurch sich in weiter oben beschriebener Weise die wiederholten Abläufe des Unterprogramms « Timer I » im gleichen Zeitraum verändern und damit auch die zeitliche Folge der ausgeführten Rampenschritte des Schrittmotores 12 und 31 an die Nähgeschwindigkeit angepaßt wird.

## Patentansprüche

1. Nähmaschine mit einer Hauptwelle (1), einer in einem Nadelstangenpendel senkrecht geführten und zur Hubbewegung mit der Hauptwelle in Antriebsverbindung stehenden Nadelstange (3), einem durch eine Mikrocomputerschaltung (42, 79) mit einer von einer konstanten Taktfrequenz abgeleiteten Schrittfrequenz gesteuerten Schrittmotor (12) zur Steuerung der Seitenbewegung der Nadel (4) verbunden ist und/oder einem durch die Mikrocomputerschaltung (42, 79) mit einer von einer konstanten Taktfrequenz abgeleiteten Schrittfrequenz gesteuerten Schrittmotor (31), der mit einem Stellmittel (25) für einen Stoffschieber (40) verbunden ist, einem mit der Hauptwelle verbundenen, die Beaufschlagung des Schrittmotors (12, 31) mit der Schrittfrequenz auslösenden Impulsgeber (40) und mit Einrichtungen (87) zur Veränderung der Drehzahl der Hauptwelle, dadurch gekennzeichnet, daß ein weiterer mit der Hauptwelle (1) verbundener Impulsgeber (80) zur Steuerung der Schrittfrequenz des Schrittmotors (12, 31) in Abhängigkeit von der Drehzahl der Hauptwelle an die Mikrocomputerschaltung (42, 79) geschaltet ist.

2. Nähmaschine nach Anspruch 1, dadurch gekennzeichnet, daß die Veränderung der Schrittfrequenz des Schrittmotors (12, 31) proportional zur Veränderung der Drehzahl der Hauptwelle erfolgt.

3. Nähmaschine nach Anspruch 1, dadurch gekennzeichnet, daß die Schrittfrequenz des Schrittmotors (12, 31) in verschiedene Stufen unterteilt und jedem Drehzahlbereich der Nähmaschine eine bestimmte Frequenzstufe zugeordnet ist.

4. Nähmaschine nach einem der Ansprüche 1 bis 3, dadurch gekennzeichnet, daß die Mikrocomputerschaltung zwei Mikrocomputer (42, 79) umfaßt, von denen der erste (79) mit einem durch eine konstante Impulsfolge gesteuerten Zähler (Zählregister R1 und R4) verbunden ist, welcher die zwischen zwei Impulsen des weiteren Impulsgebers (80) liegende Zeitspanne jeweils in ein digitales Zählersignal umsetzt, das einem die zeitlichen Abstände der aufeinanderfolgenden Schritte des Schrittmotors (12, 31) bestimmenden Zeitsteuerglied (Timerregister R2) des den Schrittmotor (12, 31) steuernden zweiten Mikrocomputers (42) zuführbar ist.

5. Nähmaschine nach Anspruch 4, dadurch gekennzeichnet, daß das Zeitsteuerglied (Timerregister R2) eine digitale Zählreinrichtung ist, die mit dem Zähler (Zählregister R1 und R4) des ersten Mikrocomputers (79) verbunden ist.

6. Nähmaschine nach Anspruch 4 oder 5, dadurch gekennzeichnet, daß jeder Schrittmotor zwei Strangwicklungen (49, 49') aufweist, deren Strangströme (I, I') jeweils zwei entgegengesetzte Sollwerte annehmen können und die durch Schalttransistoren (71, 73, 74, 76) in Vollbrückenschaltung im Gegentakt steuerbar sind, wobei die Umschaltung der Stromrichtung in den Strangwicklungen (49, 49') durch Änderung von an der Basis der Schalttransistoren (71, 73, 74, 76) anliegenden Schaltspannungen ($U_0$, $U_1$) erfolgt und die ausführenden Schritte in Treppenstufen unterteilt sind, daß der zweite Mikrocomputer (42) die stufenweise Veränderung der Größe des Strangstromes (I bzw. I') der einen Strangwicklung (49 bzw. 49') über einen ersten Digital-Analog-Wandler (52 bzw. 52') von seinem negativen Sollwert über 0 zu seinem positiven Sollwert oder umgekehrt steuert, während er die Größe des Strangstromes (I bzw. I') der anderen Strangwicklung (48' bzw. 49) über einen zweiten Digital-Analog-Wandler (52' bzw. 52) auf dem einen konstanten maximalen Sollwert hält und bei Erreichen des maximalen Sollwertes des Strangstromes (I bzw. I') der einen Strangwicklung (49 bzw. 49') die Beibehaltung dieses Sollwertes steuert und den Strangstrom (I bzw. I') der anderen Strangwicklung (49' bzw. 49) von seinem maximalen positiven Sollwert stufenweise über 0 zu seinem maximalen negativen Sollwert oder umgekehrt steuert, während er die Größe des Strangstromes (I bzw. I') der einen Strangwicklung (49 bzw. 49') auf dem vorher erreichten konstanten maximalen Sollwert hält und daß ein Zähler (Register R3) vorgesehen ist, der mit den Digital-Analog-Wandlern (52 und 52') verbunden ist, um diesen aufeinanderfolgende Zählersignale zuzuführen.

7. Nähmaschine nach Anspruch 6, dadurch gekennzeichnet, daß der Zähler (Register R3) unter dem Einfluß eines Impulsgebers (43) abwechselnd auf- und abwärts zählt, wobei der Inhalt der einzelnen Zählstufen des Zählers (R3) jeweils dem einen der beiden Digital-Analog-Wandler (52, 52') zuführbar ist, daß der zweite Mikrocomputer (42) eine Einrichtung aufweist, die bei Erreichen des Inhaltes 0 des Zählers (R3) anspricht und einen Wechsel der Schaltspannungen für die Schalttransistoren (73 und 76) derjenigen Strangwicklung (49, 49') bewirkt, deren Strom der Zähler gerade verändert und daß der zweite Mikrocomputer (42) ferner eine Einrichtung aufweist, die bei Erreichen des maximal vorgesehenen Zählinhaltes des Zählers (R3) anspricht und den Ausgang des Zählers (R3) jeweils an den anderen Digital-Analog-Wandler (52, 52') schaltet.

8. Nähmaschine nach Anspruch 7, dadurch gekennzeichnet, daß der Ausgang jedes Digital-Analog-Wandlers (52, 52') mit dem nicht invertierenden Eingang eines als PID-Regler geschalteten Operationsverstärkers (60, 60') verbunden ist, an dessen invertierenden Eingang eine dem jeweiligen Strangstrom (I, I') der Strangwicklung (49, 49') entsprechende Ist-Spannung (U₁) angeschlossen ist, daß der Ausgang des Operationsverstärkers (60, 60') an den invertierenden Eingang eines Komparators (62, 62') angeschlossen ist, an dessen nicht invertierenden Eingang eine Sägezahnspannung (U_S) liegt, daß der Ausgang des Komparators (62, 62') an der Basis der mit der Betriebsspannung (U) verbundenen Schalttransistoren (73 und 76) angeschlossen ist und daß die Basis jeweils zweier diagonal gegenüberliegender Schalttransistoren (71 und 73 bzw. 74 und 76) gemeinsam an je eine Leitung (58 bzw. 59 und 58' bzw. 59') angeschlossen ist, die wechselweise von dem zweiten Mikrocomputer (42) an eine Schaltspannung (U₀ bzw. U₁ und U'₀ bzw. U'₁) anschaltbar sind.

## Claims

1. Sewing machine with a main shaft (1), a needle rod (6) which extends vertically in a needle rod pendulum and is in driving connection with the main shaft for the lifting movement, a stepping motor (12) which is controlled by a microcomputer circuit (42, 79) having a stepping frequency derived from a constant timing/phase/cycle frequency and which is connected to the needle rod pendulum (2, 3) for controlling the lateral movement of the needle (4), and/or a stepping motor (31) which is controlled by the microcomputer circuit (42, 79) having a stepping frequency derived from a constant timing frequency and which is connected to an adjusting means (25) for a material slide/pusher (40), an impulse transmitter/pulse generator (43) which is connected to the main shaft and releases the actuation of the stepping motor (12, 31) with the stepping frequency, and devices/means (87) for changing the rotational speed of the main shaft (1), characterised in that an additional pulse generator (80), which is connected to the main shaft (1) for controlling the stepping frequency of the stepping motor (12, 31), is connected to the microcomputer circuit (42, 79) in dependence upon the rotational speed of the main shaft (1).

2. Sewing machine according to claim 1, characterised in that the change in the stepping frequency of the stepping motor (12, 31) is effected in proportion to the change in the rotational speed of the main shaft (1).

3. Sewing machine according to claim 1, characterised in that the stepping frequency of the stepping motor (12, 31) is divided into different stages/steps, and a specific/predetermined frequency stage is associated with every rotational speed range of the sewing machine.

4. Sewing machine according to one of claims 1 to 3, characterised in that the microcomputer circuit includes two microcomputers (42, 79), the first of which (79) is connected to a counter/meter (counting recorder R1 and R4) which is controlled by a constant impulse sequence/pulse train and converts the respective/each time interval between two pulses of the additional pulse generator (80) into a digital counter signal which can be supplied/fed to a time control member (timer recorder R2) of the second microcomputer (42) controlling the stepping motor (12, 31), the time control member determining the time spaces between the successive/consecutive steps of the stepping motor (12, 31).

5. Sewing machine according to claim 4, characterised in that the time control member (timer recorder R2) is a digital counting device which is connected to the counter (counting recorder R1 and R4) of the first microcomputer (79).

6. Sewing machine according to claim 4 or 5, characterised in that each stepping motor comprises two strand/phase windings (49, 49'), the strand/phase currents (I, I') of which can/may each receive two opposed desired values and are controllable in phase-opposition by means of switching transistors (71, 73, 74, 76) in a full bridge circuit, wherein the switchover of the current direction in the phase windings (49, 49') is effected by changing switching voltages/bias-reducing potentials (U₀, U₁) which are applied to the base of the switching transistors (71, 73, 74, 76), and the performing steps are divided into stair-like stages, in that the second microcomputer (42) controls the stepwise/gradual change in the size of the phase current (I or I') of one phase winding (49 or 49') via a first digital-analog transducer/transformer (52 or 52') from its negative digital-analog transducer/transformer (52 or 52') from its negative desired value above/via 0 to its positive desired value or vice versa, while it retains the size of the phase current (I or I') of the other phase winding (49' or 49) via a second digital-analog transducer (52' or 52) at the one constant, maximum desired value and, upon attainment of the maximum desired value of the phase current (I or I') of one phase winding (49 or 49'), controls the maintenance of this desired value and controls the phase current (I or I') of the other phase winding (49' or 49) from its maximum, positive desired value stepwisely above/via 0 to its maximum, negative desired value or vice versa, while it retains the size of the phase current (I or I') of one phase winding (49 or 49') at the previously attained, constant, maximum desired value, and in that a counter (recorder R3) is provided which is connected to the digital-analog transducers (52 or 52') in order to supply the latter with successive counter signals.

7. Sewing machine according to claim 6, characterised in that the counter (recorder R3) counts alternately upwards and downwards under the influence of a pulse generator (43), wherein the content of the individual counting stages of the counter (R3) can be supplied to a respective one of the two digital-analog transducers (52, 52'), in that the second microcomputer (42) comprises a device which responds/is actuated when the counter (R3) attains the content 0 and produces a change in the switching voltages for the switching transistors (73 and 76) of that phase winding (49, 49') whose current is in fact changed by the counter (recorder 3), and in that the second microcomputer (42) additionally comprises a device which responds when the maximum envisaged counting content of the counter (R3) is attained and connects the output of the counter (R3) to the other respective digital-analog transducer (52, 52').

8. Sewing machine according to claim 7, characterised in that the output of each digital-analog transducer (52, 52') is connected to the non-inverting input of an operational amplifier (60, 60') which is connected as a PID regulator/governor, an actual voltage ($U_1$) corresponding to the respective phase current (I, I') of the phase winding (49, 49') and being connected to the inverting input of the amplifier, in that the output of the operational amplifier (60, 60') is connected to the inverting input of a comparator (62, 62') which has a sawtooth voltage ($U_5$) applied to its non-inverting input, in that the output of the comparator (62, 62') is connected to the base of the switching transistors (73 and 76), which are connected to the operational voltage (U), and in that the base of every two diagonally opposed switching transistors (71 and 73 or 74 and 76) is jointly connected to a respective line/lead (58 or 59 and 58' or 59') which are alternately connectable by the second microcomputer (42) to a switching voltage ($U_0$ or $U_1$ and $U'_0$ and $U'_1$).

### Revendications

1. Machine à coudre comprenant un arbre principal (1), une tige à aiguille (6) guidée verticalement dans un dispositif pouvant effectuer un mouvement pendulaire et en liaison d'entraînement en vue de son mouvement de va-et-vient avec l'arbre principal, un moteur pas à pas (12) commandé par un montage de micro-ordinateurs (42, 79) avec une fréquence de pas dérivée d'une fréquence d'impulsions de rythme constante, le moteur étant relié à un dispositif de suspension (2,3) de la tige de l'aiguille en vue de la commande d'un mouvement latéral de l'aiguille (4) et/ou relié à un moteur pas à pas (31) commandé par le montage de micro-ordinateurs (42, 79) avec une fréquence de pas dérivée d'une fréquence d'impulsions de rythme constante, le moteur (31) étant relié à un moyen de commande (25) d'un patin d'entraînement de tissu (40), un générateur d'impulsions (43) relié à l'arbre principal et déterminant la sollicitation du moteur pas à pas (12, 31) avec la fréquence de pas, et avec des dispositifs (87) pour modifier la vitesse de rotation de l'arbre principal (1), caractérisée en ce qu'un autre générateur d'impulsions (80) relié à l'arbre principal (1) est, en vue de la commande de la fréquence de pas du moteur pas à pas (12, 31) en fonction de la vitesse de rotation de l'arbre principal (1), branché dans le montage de micro-ordinateurs (42, 79).

2. Machine à coudre selon la revendication 1, caractérisée en ce que la modification de la fréquence de pas du moteur pas à pas (12, 31) est proportionnelle à la modification de la vitesse de rotation de l'arbre principal (1).

3. Machine à coudre selon la revendication 1, caractérisée en ce que la fréquence de pas du moteur pas à pas (12, 31) est subdivisée en divers étages et en ce qu'à chaque zone de vitesse de la machine à coudre est associé un étage de fréquence déterminé.

4. Machine à coudre selon l'une quelconque des revendications 1 à 3, caractérisée en ce que le montage de micro-ordinateurs comprend deux micro-ordinateurs (42, 79), dont le premier (79) est relié à un compteur (registres de comptage R1 et R4) commandé par une succession d'impulsions constante, compteur qui convertit la durée séparant deux impulsions de l'autre générateur d'impulsions (80) en un signal de comptage numérique qui peut être envoyé à un organe de commande de temps (registre de synchronisation R2) qui détermine l'intervalle de temps entre pas successifs du moteur pas à pas (12, 31) et qui fait partie du second micro-ordinateur (42) qui commande le moteur pas à pas (12, 31).

5. Machine à coudre selon la revendication 4, caractérisée en ce que l'organe de commande de temps (registre de synchronisation R2) est un dispositif de comptage numérique qui est relié au compteur (registres de comptage R1 et R4) du premier micro-ordinateur (79).

6. Machine à coudre selon la revendication 4 ou 5, caractérisée en ce que chaque moteur pas à pas comprend deux enroulements de phase (49, 49') dont les courants de phase (I, I') peuvent avoir respectivement deux valeurs de consigne opposées et qui peuvent être commandés par l'intermédiaire de transistors de commutation (71, 73, 74, 76) en push-pull en circuit pont complet, l'inversion de sens du courant dans les enroulements de phase (49, 49') s'effectuant par modification des tensions de commutation ($U_0$, $U_1$) appliquées à la base des transistors de commutation (71, 73, 74, 76) et les pas effectués étant subdivisés en étages en gradins, en ce que le second micro-ordinateur (42) commande la modification par étages de l'importance du courant de phase (I ou I') d'un enroulement de phase (49 ou 49') par l'intermédiaire d'un premier convertisseur numérique-analogique (52 ou 52') depuis sa valeur de consigne négative en passant par zéro pour parvenir à sa valeur de consigne positive, ou inversement, alors qu'il maintient la valeur du courant de phase (I ou I') de l'autre enroulement de phase (49' ou 49) par l'intermédiaire d'un second convertisseur numérique-analogique (52' ou 52) à une valeur de consigne maximale et constante et commande le maintien de cette valeur de consigne lorsqu'est atteinte la valeur de consigne maximale du courant de phase (I ou I') de l'un des enroulements de phase (49 ou 49'), et commande le courant de phase (I ou I') de l'autre enroulement de phase (49' ou 49) depuis sa valeur de consigne maximale positive et par étage en passant par zéro jusqu'à sa valeur de consigne négative maximale, ou inversement, alors qu'il maintient la valeur du courant de phase (I ou I') de l'un des enroulements de phase (49 ou 49') à sa valeur de consigne maximale et constante préalablement atteinte, et en ce qu'il est prévu un compteur (registre R3) qui est relié aux convertisseurs numériques-analogiques (52, 52') pour leur envoyer des signaux de comptage successifs.

7. Machine à coudre selon la revendication 6, caractérisée en ce que le compteur (registre R3) compte sous l'influence d'un générateur d'impulsions de rythme (43) successivement en montant et en descendant alors que le contenu des étages de comptage individuels du compteur (R3) peuvent être envoyés respectivement à l'un des deux convertisseurs numériques-analogiques (52, 52'), en ce que le deuxième micro-ordinateur (42) comprend un dispositif qui réagit lorsqu'est atteint le contenu 0 du compteur (R3) et détermine un changement de tension de commutation pour les transistors de commutation (73 et 76) de l'enroulement de phase (49, 49') dont le courant vient d'être modifié par le compteur (registre 3), et en ce que le deuxième micro-ordinateur (42) comprend en outre un dispositif qui réagit lorsqu'est atteint le contenu de comptage prédéterminé et maximal du compteur (R3) et commute la sortie du compteur (R3) sur l'autre convertisseur numérique-analogique (52, 52').

8. Machine à coudre selon la revendication 7, caractérisée en ce que la sortie de chaque convertisseur numérique-analogique (52, 52') est reliée à l'entrée non inverseuse d'un amplificateur opérationnel (60, 60') monté en tant que régulateur PID, à l'entrée inverseuse duquel est raccordée une tension réelle ($U_1$) correspondant au courant de phase (I, I') de l'enroulement de phase (49, 49'), en ce que la sortie de l'amplificateur opérationnel (60, 60') est raccordée à l'entrée inverseuse d'un comparateur (62, 62') à l'entrée non inverseuse duquel est appliquée une tension en dents de scie ($U_S$), en ce que la sortie du comparateur (62, 62') est raccordée à la base des transistors de commutation (73 et 76) reliés à la tension de fonctionnement (U), et en ce que la base de deux transistors de commutation (71 et 73 ou 74 et 76), respectivement opposés diagonalement, est raccordée en commun à une ligne respective (58 ou 59 et 58' ou 59'), qui peut être soumise alternativement par le deuxième micro-ordinateur (42) à une tension de commutation ($U_0$ ou $U_1$ et $U'_0$ ou $U'_1$).

*Fig.1*

Fig. 2

*Fig. 3*

**0 027 867**

Fig. 4

## Fig. 5

$U_S$

$U_R$

$U_T$

## Fig. 9

INT

Setze Flipflopsch. 45 zurück

Hole nächste Nadel-stangenposition aus Musterspeicher

Errechne Zahl der erforderlichen Ram-penschritte bis zur neuen Nadelst.-Pos. und gebe sie in Reg.5

Bestimme Drehricht. des Schrittmotors 12 durch Setzen bzw Löschen von Flag. 1 und 2

Ermögliche Pro-grammunterbre-chung durch das interne Timerreg.R2

Ist Reg. 5=0?  nein

Sperre Programm-unterbrechung durch das interne Timerregister R2

Ende

5

**0 027 867**

*Fig. 6*

Timer I

Lade Timerreg. R2
mit der Zahl XX

Flag 1 gesetzt?
nein — ja

Inkrementiere

Dekrementiere

Inh.
Reg. 3 = FF ?
ja — nein — nein

Inh.
Reg 3 = 0 ?
ja

Tausche Bits 0,1
in Reg. 0 u. gebe
Inhalt auf Leitg.
58 u. 59

Wechsle Inh.
von Flag 1

Gebe Inhalt von Reg. 3 an den
Zwischenspeicher, der durch
Flag 2 bestimmt ist

Inh.
Reg. 3 = FF ?
ja
nein

Wechsle Inh.
von Flag 2

Dekrementiere Reg. 5

Ende

6

Fig. 7

```
      ( INT   TO )
            │
            ▼
   ┌──────────────────┐
   │ Setze Flipflop — │
   │ schalter 83 zurück│
   └──────────────────┘
            │
            ▼
        ╱Inh.  ╲      ja (Drehzahl < 100 n/min)
       ╱Zählreg.R4╲──────────────────────────────────┐
       ╲ ≧ 1 ?   ╱                                    │
        ╲      ╱                                       ▼
          │                                 ┌──────────────────────┐
          │ nein                            │ Gebe 0 auf Leitg. 89 │
          ▼                                 │ und 0 auf Leitg. 90  │
        ╱Inh.  ╲    nein (Drehzahl < 200 n/min)└──────────────────────┘
       ╱Zählreg.R4╲──────────────────────────┐            │
       ╲ = 0?    ╱                            ▼            │
        ╲      ╱                  ┌──────────────────────┐ │
          │ ja                    │ Gebe 1 auf Leitg. 89 │ │
          ▼                       │ und 0 auf Leitg. 90  │ │
        ╱Inh.  ╲   ja(Drehz. < 400n/min)└──────────────────────┘
       ╱Zählreg.R1╲──────────────┐           │            │
       ╲ ≧ 128?  ╱               ▼           │            │
        ╲      ╱      ┌──────────────────────┐│           │
          │ nein      │ Gebe 0 auf Leitg. 89 ││           │
          │ (Drehzahl │ und 1 auf Leitg. 90  ││           │
          │ > 400n/min)└──────────────────────┘           │
          ▼                          │         │          │
   ┌──────────────────┐              │         │          │
   │ Gebe 1 auf Leitg. 89│           │         │          │
   │ und 1 auf Leitg.  90│           │         │          │
   └──────────────────┘              │         │          │
          │◄─────────────────────────┴─────────┴──────────┘
          ▼
   ┌──────────────────┐
   │ Lösche Zählreg.R4│
   │ Lösche Zählreg.R1│
   └──────────────────┘
          │
          ▼
       ( Ende )
```

Fig. 8

```
     ( Timer II )
          │
          ▼
        ╱Inh.  ╲     nein
       ╱Zählreg R4╲──────────┐
       ╲ = FF    ╱           ▼
        ╲      ╱   ┌────────────────────┐
          │ ja     │ Inkrementiere      │
          │        │ Zählregister R4    │
          │        └────────────────────┘
          ▼                  │
       ( Ende )◄─────────────┘
```